Europäisches Patentamt

European Patent Office

Office européen des brevets

(11) Veröffentlichungsnummer: **0 158 019**

**B1**

(12) **EUROPÄISCHE PATENTSCHRIFT**

(45) Veröffentlichungstag der Patentschrift:
04.11.87

(51) Int. Cl.⁴: **C 09 G 1/10**

(21) Anmeldenummer: **85101099.1**

(22) Anmeldetag: **02.02.85**

(54) **Fussbodenpflegeemulsion.**

(30) Priorität: **11.02.84 DE 3404861**

(43) Veröffentlichungstag der Anmeldung:
**16.10.85 Patentblatt 85/42**

(45) Bekanntmachung des Hinweises auf die Patenterteilung:
**04.11.87 Patentblatt 87/45**

(84) Benannte Vertragsstaaten:
**CH DE FR GB LI SE**

(56) Entgegenhaltungen:
**FR-A-2 130 617**
**FR-A-2 147 025**
**US-A-3 647 732**

(73) Patentinhaber: **HOECHST AKTIENGESELLSCHAFT,
Postfach 80 03 20, D-6230 Frankfurt am Main 80
(DE)**

(72) Erfinder: **Jacob, Rolf, Dr., Adolf- von- Baeyer-
Strasse 30, D-8906 Gersthofen (DE)**
Erfinder: **Kapfer, Werner, Mutershofer Strasse 21,
D-8901 Lützelburg (DE)**

LIBER, STOCKHOLM 1987

## Beschreibung

Die Erfindung betrifft eine widerstandsfähige Filme bildende Fußbodenpflegeemulsion auf Basis von Wachsen und Polymeren, welche als alleinigen Plastifikator Caprolactam enthält.

Zur Pflege von Fußbodenbelägen unterschiedlicher Art, mit Ausnahme von textilen Belägen, werden heute vorwiegend Pflegemittel auf Emulsionsbasis, wie Selbstglanzemulsionen, Wischpflegemittel, Sprühreiniger verwendet. Die wäßrigen Emulsionen enthalten als Hauptkomponenten Wachs und/oder Polymere (vgl. z. B. FR-PS-2 130 617).

Wachsemulsionen für sich trocknen bei Raumtemperatur zu geschlossenen Filmen auf. Die Filmbildung ist auch noch bei Abmischungen von Wachsemulsionen mit bis zu etwa 20 Polymerdispersionen gewährleistet. Hier reicht die plastifizierende Wirkung der Wachse allein aus. Bei Abmischungen mit höheren Polymeranteilen sind jedoch Plastifikatoren und Filmbildehilfsmittel erforderlich, um auch bei Raumtemperatur eine brauchbare Filmbildung zu erreichen. In der Praxis übliche Plastifikatoren und Filmbildehilfsmittel sind nahezu ausschließlich Dibutylphthalat, Glykole, Glykolether (Methyl-, Ethyldiglykol), Tributoxyethylphosphat, Pyrrolidon-2, oxethylierte Nonylphenole. Im allgemeinen ist es erforderlich, drei bis vier der genannten Substanzen zu verwenden, um die gewünschte Wirkung zu erzielen. Die genannten Plastifikatoren und Filmbildehilfsmittel sind außerdem unter modernen Gesichtspunkten als toxikologisch nicht unbedenklich zu betrachten. Sie erhöhen schließlich die Klebrigkeit der Filme und verlangen eine intensive Einarbeitung in die Emulsionen unter Rühren während etwa einer halben Stunde.

Die Nachteile der herkömmlichen Plastifizierung sind auch dann nicht vollständig vermeidbar, wenn die Polymerdispersionen mit den üblichen Plastifikatoren und Filmbildehilfsmitteln vorplastifiziert werden. Die Verwendung anderer als der praxisüblichen Plastifikatoren und Filmbildehilfsmittel hat bisher ebenso wenig zu grundlegenden Verbesserungen und Vorteilen geführt.

Es ist bekannt, daß ein Zusatz von Caprolactam die Eigenschaften von Fußbodenpflegemittelfilmen verbessern kann (vgl. Poss et al. Soap Chemical Specialities, 1, 1969, S. 84 (CSMA 55th Annual Meeting 1968, S. 202); US-PS-4 299 749 FR-PS-2 147 025), wobei jedoch immer noch herkömmliche Plastifikatoren und Filmbildehilfsmittel in den üblichen Mengen verwendet werden. Bisher erschien es offenbar nicht möglich, neben einem Lactam, wie Caprolactam, auf zusätzliche übliche Plastifikatoren und Filmbildehilfsmittel zu verzichten. Damit bleiben deren genannte Nachteile weitgehend bestehen.

Es wurde nun gefunden, daß beim ausschließlichen Einsatz von größeren Mengen Caprolactam auf weitere Plastifikatoren und Filmbildehilfsmittel verzichtet werden kann. Damit werden die geschilderten Nachteile der herkömmlichen Plastifizierung von vornherein vermieden.

Gegenstand der Erfindung ist somit eine Fußbodenpflegeemulsion auf Basis von Wachsen und Polymeren, bestehend aus 10 bis 30 Gew.-%, bezogen auf die Gesamtemulsion eines natürlichen, teilsynthetischen und/oder vollsynthetischen carboxylgruppenhaltigen Wachses mit einer Säurezahl von 5 bis 100, einer Verseifungszahl von 20 bis 150 und einem Tropfpunkt von 60 bis 130°C, 5 bis 50 Gew.-%, bezogen auf die Gesamtemulsion, einer gegebenenfalls metallsalzhaltigen Polymerdispersion auf Basis eines Styrol- und/oder Acrylatpolymerisats und einem MFT-Wert von 30 bis 100°C, 2 bis 50 Gew.-% Caprolactam als alleinigem Plastifikator, Rest Wasser.

Gegenstand der Erfindung ist aber auch das für die Herstellung dieser Fußbodenpflegeemulsion geeignete Wachs.

Die erfindungsgemäße Fußbodenpflegeemulsion besteht aus 10 bis 30, vorzugsweise 10 bis 25 Gew.-%, bezogen auf die Gesamtemulsion, eines natürlichen, teilsynthetischen und/oder vollsynthetischen carboxylgruppenhaltigen Wachses mit einer Säurezahl von

5 bis 100, vorzugsweise 20 bis 40, einer Verseifungszahl von 20 bis 150, vorzugsweise 20 bis 100 und einem Tropfpunkt von 60 bis 130, vorzugsweise 80 bis 110°C,

5 bis 50, vorzugsweise 20 bis 30 Gew.-%, bezogen auf die Gesamtemulsion, einer gegebenenfalls metallsalzhaltigen Polymerdispersion auf Basis eines Styrol- und/oder Acrylatpolymerisats mit einem Feststoffgehalt von 38 bis 40 Gew.-% und einer minimalen Filmbildetemperatur (MFT-Wert) von 30 bis 100°C,

2 bis 50, vorzugsweise 15 bis 20 Gew.-% Caprolactam, Rest Wasser, sowie gegebenenfalls üblichen Zusatzstoffen. Der Festkörpergehalt beträgt 10 bis 40, vorzugsweise 15 bis 25 Gew.-%.

Das für die Herstellung der Fußbodenpflegeemulsion geeignete natürliche, teilsynthetische oder vollsynthetische Wachs hat eine Säurezahl von 5 bis 100, sine Verseifungszahl von 20 bis 150 und einen Tropfpunkt von 60 bis 130°C, und ist gekennzeichnet durch einen Gehalt von 10 bis 70 Gew.-% an Caprolactam.

Für die Herstellung der erfindungsgemäßen Emulsionen kommen Carboxylgruppen enthaltende natürliche, teilsynthetische oder synthetische Wachse in Frage. Im einzelnen seien genannt: Polyäthylenwachsoxidate mit Molgewichten zwischen etwa 2 000 und 10 000 mit Säurezahlen zwischen 7 und 70, insbesondere 15 bis 50, Wachse, wie sie durch Oxidation von geradkettigen Paraffinen, mikrokristallinen Wachsen oder Fischer-Tropsch-Wachsen gewinnbar sind, mit Säurezahlen zwischen etwa 5 und 40, sowie die bei der oxidativen Bleichung von entharztem oder nicht entharztem Rohmontanwachs, beispielsweise mittels Chromsäure, anfallenden Wachse mit Säurezahlen zwischen etwa 5 und 80. Geeignet sind ferner Teilveresterungsprodukte derartiger Wachse, die in bekannter Weise durch Umsetzen der Oxidate mit ein- oder mehrwertigen Alkoholen erhältlich sind und Säure- und Verseifungszahlen im Bereich 5 bis 80 bzw. 60 bis 160 aufweisen. Beispiele sind Esterwachse auf Rohmontanwachsbasis und teilveresterte Polyäthylenoxidate. Bei den in der Natur direkt vorkommenden Wachsen wie Carnauba- und Candelillawachs, liegt die Säurezahl im genannten Bereich; sie

2

können daher ohne chemische Veränderung eingesetzt werden.

Die Wachse werden in die in Wasser dispergierbare Form übergeführt durch Reagierenlassen der Carboxylgruppen mit Alkalilaugen oder primären, sekundären oder tertiären Aminen oder auch Aminalkoholen mit Siedepunkten zwischen etwa 110 und 180°C, wie Diethylaminoethanol, 2-Amino-2-methyl-1-propanol oder Morpholin. Man erhält die Verseifungsprodukte durch Zusammenbringen der geschmolzenen Wachse mit den Laugen bzw. Aminen. Zur Emulgierung von carboxylgruppenarmen Wachsen kann der Zusatz von Fettsäuren, wie Öl-, Stearin- und Palmitinsäure, erforderlich sein. Es entstehen somit anionaktive Wachsemulsionen.

Geeignete Polymerdispersionen enthalten ein Styrol-, Styrol/Acrylat- oder Acrylat-Polymerisat. Sie haben einen Feststoffgehalt von 38 bis 40, vorzugsweise von 35 bis 40 Gew.-% und eine minimale Filmbildetemperatur von 30 bis 100, vorzugsweise von 40 bis 60°C. Beispiele für derartige Polymerdispersionen sind bekannte, im Handel erhältliche metallsalzfreie oder metallsalzhaltige anionische Dispersionen.

In der erfindungsgemäßen Fußbodenpflegeemulsion können ferner übliche, sich nach der Rezeptur und dem Einsatzzweck richtende weitere Bestandteile, wie z. B. andere Wachse, Paraffine, ionogene und/oder nichtionogene Emulgatoren, reinigend wirkende Stoffe, Lösemittel, Netz- und Verlaufmittel, Polymerdispersionen, Entschäumer, Filmbildehilfsmittel, Antistatika, Bakterizide, Konservierungsmittel, Farbstoffe, Parfüms und Korrosionsinhibitoren enthalten sein.

Die Einarbeitung des Caprolactams in die Fußbodenpflegeemulsion kann auf verschiedene Weise mit dem gleichen Effekt erfolgen. Entweder wird das Caprolactam in das Wachs bzw. in die Wachsemulsion oder in die Polymerdispersion, die für die Fußbodenpflegeemulsion verwendet wird, eingearbeitet oder Caprolactam-Lösungen in Wasser werden Wachsemulsions-Polymerdispersions-Abmischungen nachträglich zugegeben.

Durch die Einarbeitung von Caprolactam in die Fußbodenpflegeemulsion wird eine permanente Plastifizierung erzielt. Das Emulgierverhalten caprolactamhaltiger Wachse wird gegenüber dem caprolactamfreier Wachse nicht beeinträchtigt. Das Analoge gilt für Polymerdispersionen und Pflegemittel auf Emulsionsbasis. Bei der praxisüblichen Abmischung von Wachsemulsionen mit Polymerdispersionen wird bei Verwendung von caprolactamhaltigen Wachsen oder caprolactamhaltigen Polymerdispersionen kein weiterer Plastifikator und kein weiteres Filmbildehilfsmittel benötigt.

Pflegemittel der beschriebenen Art trocknen in gewohnter Weise mit Selbstglanz auf und führen zu Filmen, die gegen Verschmutzung und mechanische Beschädigungen besonders widerstandsfähig sind. Durch Mitverwendung von Caprolactam in ausreichender Menge wird die Detergentienfestigkeit der Filme sowohl wachsfreier Pflegemittel auf reiner Polymerbasis als auch wachsreicher Abmischungen erheblich verbessert.

Das Fließ- und Abriebverhalten der Filme, in die Caprolactam in der angegebenen Weise eingearbeitet wurde, wird beim Polieren mit schnellaufenden, sog. high-speed- und super-high-speed-Maschinen (bis zu 1 500 U/min.) ebenfalls wesentlich verbessert und so ein optimaler Schutz der Bodenbeläge gewährleistet. Außerdem wird der Glanz der Filme nach maschineller Behandlung sichtbar satter und messbar höher.

In den Beispielen bedeuten Teile Gewichtsteile.

**Beispiel 1 und 2**

Durch Zusatz von Caprolactam zu Wachsschmelzen wurden Wachse erhalten, die in der bevorzugten Schuppenform konfektioniert werden können. Auf diese Weise hergestellte Wachse ließen sich wie üblich emulgieren. Die Emulsionen wurden anschließend mit Polymerdispersion abgemischt.

a) <u>Wachse</u>

| | I Bsp.1 | II Bsp.2 |
|---|---|---|
| Montanwachsester SZ 35 VZ 140 TP 80°C | - | 20 T. |
| Oxidiertes Polyethylenwachs SZ 22 VZ 85 TP 105°C | 50 T. | 30 T. |
| Caprolactam | 50 T. | 50 T. |
| Caprolactamhaltige Wachse | 100 T. | 100 T. |

b) <u>Wachsemulsion</u>

| | |
|---|---|
| Caprolactamhaltiges Wachs (I oder II) | 33,5 T. |
| Oxethyliertes Nonylphenol (8-10 AeO) oder Isotridekanol (8 AeO) | 6,5 T. |
| Kaliumhydroxid-Lösung, 21,5 %ig | 1,0 T. |
| Methyldiglykol | 3,0 T. |
| Wasser | 56,0 T. |
| Caprolactamhaltige Wachsemulsion, ca. 40 %ig | 100,0 T. |

Zur Herstellung der Wachsemulsion wurden die Wachse mit dem Caprolactam und dem Emulgator bei 110°C zusammengeschmolzen, die Schmelze mit Kaliumhydroxidlösung und Methyldiglykol versetzt und in das vorgelegte heiße Wasser eingerührt. Nach kurzem Aufkochen wurde die Emulsion rasch auf Raumtemperatur gekühlt.

c) Abmischung

| | |
|---|---|
| Caprolactamhaltige Wachsemulsion | 30-50 T. |
| Polymerdispersion | 70-50 T. |
| Fluortensidlösung, 1 %ig | 1-2 T. |
| | |
| Caprolactamhaltiges Fußbodenpflegemittel | 101-102 T. |

Herstellung: Mischen bei Raumtemperatur

d) Eigenschaften
Lagerstabiles Emulsionskonzentrat, welches vor der Anwendung verdünnt werden kann.
Hoher Glanz, gute Abriebfestigkeit und Gleitsicherheit der entstandenen Filme.

**Beispiele 3 und 4**

Eine Polymerdispersion wurde durch Zusatz einer 50 %igen wäßrigen Lösung von Caprolactam vorplastifiziert. Anschließend wurde diese vorplastifizierte Dispersion durch Verdünnen und/oder Mischen mit einer Wachsemulsion zu einer Fußbodenpflegeemulsion mit den gewünschten Eigenschaften verarbeitet.

a) Polymerdispersion

| | |
|---|---|
| Polymerdispersion ca. 40 %ig | 80 T. |
| wäßrige Caprolactam-Lösung, 50 %ig; | 20 T. |
| | |
| Caprolactamhaltige Polymerdispersion, ca. 42 %ig | 100 T. |

b) Abmischung

| | Bsp. 3 | Bsp. 4 |
|---|---|---|
| Caprolactamhaltige Polymerdispersion, ca. 42 %ig | 40 T. | 50 T. |
| Wachsemulsion ca. 35 %ig | 15 T. | - T. |
| Wasser | 50 T. | 50 T. |
| Netzharzlösung, 15 %ig | 5 T. | 5 T. |
| Fluortensidlösung, 1 %ig | 2 T. | 2 T. |
| | | |
| Caprolactamhaltige Fußbodenpflegeemulsion, ca. 22 %ig | 112 T. | 107 T. |

Herstellung: Mischen bei Raumtemperatur

c) Eigenschaften
Hoher Selbstglanz, gute Detergentien und Verschleißfestigkeit der Filme.

**Beispiele 5 und 6**

Caprolactam wurde Abmischungen von Wachsemulsionen mit Polymerdispersionen und Polymerdispersions-Abmischungen herkömmlicher Art in Form einer wäßrigen Lösung zugesetzt. Dadurch wurde eine zeitsparende Herstellung, auch mit Hilfe elektronischer Regeltechniken möglich. Das Abmischungsprinzip ist auch bei wasserklaren Selbstglanzemulsionen anwendbar. Auf diese Weise können hohe Festkörperanteile ohne Beeinträchtigung des klaren Aussehens erzielt werden.

| | Beispiel 5 | Beispiel 6 |
|---|---|---|
| Wachsemulsion, 15 %ig | 60,0 T. | - |
| Polymerdispersion, 40 %ig | 15,0 T. | 50,0 T. |
| Wasser | 25,0 T. | 37,0 T. |
| Ammoniaklösung, 25 %ig | - | 2,5 T. |
| Caprolactamlösung, 50 %ig | 6,0 T. | 12,0 T. |
| Fluortensidlösung, 1 %ig | 2,0 T. | 1,0 T. |
| | | |
| Fußbodenpflegemittel | 108,0 T. | 102,5 T. |

Herstellung: Mischen bei Raumtemperatur

## Eigenschaften

Beispiel 5: Polierbare verschleißfeste Filme für Fußbodenbeläge aller Art. Gute Haftung auf Steinböden.
Beispiel 6: Wasserklar. Filme begehfest mit guter Detergentienfestigkeit.

## Vergleichsbeispiele A und B und Beispiel 7

Es wurden wachsfreie Selbstglanzemulsionen herkömmlicher Art hergestellt und verglichen mit einer Fußbodenpflegeemulsion, in welcher die Plastifikatoren durch Caprolactam ersetzt wurden.

|  | Vergleichsbeispiel | | Beispiel 7 |
| --- | --- | --- | --- |
|  | A | B |  |
| Wasser | 57,5 | 47,0 | 43,0 |
| Polymerdispersion Acrylatbasis 40 %ig | 35,0 | 45,0 | 50,0 |
| Cocosfettsäuremonoethanolamid/5 AeO | 2,0 | - | - |
| Methyldiglykol | 3,0 | 3,0 | - |
| Tributoxyethylphosphat | 1,5 | 1,0 | - |
| Dibutylphthalat | - | 1,0 | - |
| Fluortensidlösung 1 %ig | - | 1,0 | - |
| Caprolactam fest | - | - | 6,0 |
| Ammoniaklösung ca. 26 % | 1,0 | 2,0 | 2,5 |
|  | 100,0 | 100,0 | 102,5 |
| Detergentienfestigkeit* | | | |
| a) PVC-Platte | 5 | 5 | 1 |
| b) Linoleum | 5 | 5 | 1 |

*Prüfung der Detergentienfestigkeit der Filme nach 24 Std. Lagerung bei Raumtemperatur, 25 Doppelbürstenstriche/Gardner Straight Line Washability Apparatus (ASTM D 1792-66)

| Beurteilung | Filmzustand |
| --- | --- |
| 1 = sehr gut | 100 % erhalten |
| 2 = gut | 90 % |
| 3 = befriedigend | 70 % |
| 4 = ausreichend | 50 % |
| 5 = unzureichend | unter 50 % |

## Vergleichsbeispiel C und Beispiel 5

Es wurde eine wachshaltige, polierbare Selbstglanzemulsion herkömmlicher Art verglichen mit einer nur Caprolactam als Plastifikator enthaltenden Emulsion.

|  | Vergleichsbeispiel C | Beispiel 5 |
| --- | --- | --- |
| Wachsemulsion (Ester/PE-Wachs Basis) 15 %ig | 60,0 | 60,0 |
| Styrol-Acrylat- oder Acrylatdispersion 40 %ig | 15,0 | 15,0 |
| Wasser | 25,0 | 25,0 |
| Ethyldiglykol | 2,0 | - |
| Tributoxyethylphosphat | 1,5 | - |
| Caprolactam fest | - | 3,0 |
| Fluortensidlösung 1 % | 2,0 | 2,0 |
|  | 105,0 | 105,0 |
| Detergentienfestigkeit* | | |
| PVC-Platte | 5 | 2 |

*Wie bei Beispiel 7

**Patentansprüche**

1. Fußbodenpflegeemulsion auf Basis von Wachsen und Polymeren bestehend aus

10 bis 30 Gew.-%, bezogen auf die Gesamtemulsion, eines natürlichen, teilsynthetischen und/oder vollsynthetischen carboxylgruppenhaltigen Wachses mit einer Säurezahl von 5 bis 100, einer Verseifungszahl von 20 bis 150 und einem Tropfpunkt von 60 bis 130°C,

5 bis 50 Gew.-%, bezogen auf die Gesamtemulsion, einer gegebenenfalls metallsalzhaltigen Polymerdispersion auf Basis eines Styrol- und/oder Acrylatpolymerisats und einer minimalen Filmbildetemperatur (einem MFT-Wert) von 30 bis 100°C,

2 bis 50 Gew.-% Caprolactam als alleinigem Plastifikator

Rest Wasser.

2. Fußbodenpflegeemulsion gemäß Anspuch 1, dadurch gekennzeichnet, daß sie andere Wachse, Paraffine, ionogene und/oder nichtionogene Emulgatoren, reinigend wirkende Stoffe, Lösemittel, Netz- und Verlaufmittel, Polymerdispersionen, Entschäumer, Filmbildehilfsmittel, Antistatika, Bakterizide, Konservierungsmittel, Farbstoffe, Parfüms und Korrosionsinhibitoren als übliche Zusatzstoffe enthält.

3. Verfahren zur Herstellung der Fußbodenpflegeemulsion gemäß Anspruch 1, dadurch gekennzeichnet, daß man zunächst Wachs und Caprolactam zusammenschmilzt und emulgiert und danach die Polymerdispersion hinzufügt.

4. Verfahren zur Herstellung der Fußbodenpflegeemulsion gemäß Anspruch 1, dadurch gekennzeichnet, daß man das Wachs zunächst emulgiert und danach die Polymerdispersion und das Caprolactam hinzufügt.

5. Für die Herstellung der Fußbodenpflegeemulsion gemäß Anspruch 1 geeignetes natürliches, teilsynthetisches oder vollsynthetisches carboxylgruppenhaltiges Wachs mit einer Säurezahl von 5 bis 100, einer Verseifungszahl von 20 bis 150 und einem Tropfpunkt von 60 bis 130°C, gekennzeichnet durch einen Gehalt von 10 bis 70 Gew.-% an Caprolactam.


**Claims**

1. A floor care emulsion based on vaxes and polymers comprising

10 to 30 % by weight, relative to the total emulsion, of a natural, partly synthetic and/or wholly synthetic wax having an acid number of 5 to 100, a saponification number of 20 to 150 and a drop point of 60 to 130°C,

5 to 50 % by weight, relative to the total emulsion, of a polymer dispersion which is based on a styrene and/or acrylate polymer has a minimum film formation temperature of 30 to 100°C,

2 to 50 % by weight of caprolactam as sole plastificator,

and a remainder of water.

2. The floor care emulsion as claimed in claim 1 which contains as customary additives other waxes paraffins, ionic and/or nonionic emulsifiers, substances which have a cleaning action solvents, wetting and flow agents, polymer dispersions, defoamers, film formation aids, antistats, bactericides, preservatives, dyestuffs, perfumes and corrosion inhibitors.

3. A process for preparing the floor care emulsion claimed in claim 1 which comprises first of all melting together and emulsifying the wax and the caprolactam and then adding the polymer dispersion.

4. A process for preparing the floor care emulsion claimed in claim 1 which comprises first of all emulsifying the wax and then adding the polymer dispersion and the caprolactam.

5. A natural, partly synthetic or wholly synthetic wax which is suitable for preparing the floor care emulsion claimed in claim 1, has an acid number of 5 to 100, a saponification number of 20 to 150 and a drop point of 60 to 130°C and contains 10 to 70 % by weight of caprolactam.


**Revendications**

1. Emulsion pour l'entretien des sols à base de cires et de polymères, constituée de

10 à 30 % en poids, par rapport à l'émulsion totale, d'une cire contenant des groupes carboxyle, naturels, semi-synthétiques et/ou entièrement synthétiques, ayant un indice d'acide de 5 à 100, un indice de saponification de 20 à 150 et un point de goutte de 60 à 130°C;

de 5 à 50 % en poids, par rapport à l'émulsion totale, d'une dispersion de polymères, contenant éventuellement des sels métalliques, à base d'un polymère du styrène et/ou d'un polyacrylate, et ayant une température minimale pour la formation de film (TMF) de 30 à 100°C;

de 2 à 50 % en poids de caprolactame en tant que plastifiant unique;

le reste étant de l'eau.

2. Emulsion pour l'entretien des sols selon la revendication 1, caractérisée en ce qu'elle contient d'autres cires, des paraffines, des agents émulsionnants ionogènes et/ou non-iogènes, des substances à effet détergent, des solvants, des mouillants et agents d'étalement, des dispersions de polymères, des anti-moussants, des auxiliaires filmogènes, des antistatiques, des bactéricides, des agents de conservation, des colorants, des parfums et des inhibiteurs de corrosion en tant qu'additifs habituels.

3. Procédé pour la préparation de l'émulsion pour l'entretien des sols selon la revendication 1, caractérisé en ce qu'on fait d'abord fondre ensemble et émulsionner la cire et le caprolactame, avant d'y ajouter la dispersion polymère.

4. Procédé pour la préparation de l'émulsion pour l'entretien des sols selon la revendication 1, caractérisé en ce qu'on émulsionne d'abord la cire, puis qu'on y ajoute la dispersion polymère et le caprolactame.

5. Cire contenant des groupes carboxyle, naturelle, semi-synthétique ou entièrement synthétique, convenant à la préparation de l'émulsion pour l'entretien des sols selon la revendication 1, ayant un indice d'acide de 5 à 100, un indice de saponification de 20 à 150 et un point de goutte de 60 à 130°C, caractérisée en ce qu'elle contient de 10 à 70 % de caprolactame.